Europäisches Patentamt

(19) European Patent Office

Office européen des brevets

(11) Numéro de publication: **0 079 860**

**A1**

# (12) DEMANDE DE BREVET EUROPEEN

(21) Numéro de dépôt: **82810485.1**

(22) Date de dépôt: **11.11.82**

(51) Int. Cl.³: **B 29 C 1/04**
**C 23 C 15/00**

(30) Priorité: **16.11.81 CH 7338/81**

(43) Date de publication de la demande:
**25.05.83 Bulletin 83/21**

(84) Etats contractants désignés:
**AT BE CH DE FR GB IT LI NL SE**

(71) Demandeur: **BATTELLE MEMORIAL INSTITUTE**
**7 route de Drize**
**CH-1227 Carouge/Genève(CH)**

(72) Inventeur: **Zega, Bogdan**
**Rue de Lyon 67**
**CH-1203 Genève(CH)**

(72) Inventeur: **Gold, Dieter**
**1 rue Jean-Louis Hugon**
**CH-1205 Genève(CH)**

(74) Mandataire: **Dousse, Blasco et al,**
**7, route de Drize**
**CH-1227 Carouge/Genève(CH)**

(54) Empreinte pour matrice de moulage ou de pressage de précision de matière plastique notamment de disques d'enregistrement d'information et procédé de revêtement de cette empreinte.

(57) Ce revêtement est formé d'un nitrure d'un métal de transition notamment de ZrN déposé sur une empreinte de moulage ou de pressage de matière plastique pour augmenter sa dureté et réduire l'adhérence entre l'empreinte et la matière plastique moulée ou pressée. Ce revêtement est réalisé en combinant notamment la pulvérisation cathodique au magnétron en atmosphère réactive de $N_2$ par la technique de l' "ion plating".

EP 0 079 860 A1

EMPREINTE POUR MATRICE DE MOULAGE OU DE PRESSAGE DE PRECISION

DE MATIERE PLASTIQUE NOTAMMENT DE DISQUES D'ENREGISTREMENT

D'INFORMATION ET PROCEDE DE REVETEMENT DE CETTE EMPREINTE

L'invention se rapporte à une empreinte pour matrice de moulage ou de pressage de précision de matière plastique, notamment de disques d'enregistrement d'information recouverte d'un revêtement dur, et à un procédé de revêtement de cette empreinte.

Le coût de production des moules ou matrices pour la fabrication de disques d'enregistrement phonographique ou vidéo est relativement élevé étant donné qu'il s'agit de matrices de haute précision, notamment celles à enregistrement numérique. Par conséquent, ces matrices doivent avoir une durée de vie suffisamment longue et pour cela, résister à l'usure provoquée entre autre par des constituants abrasifs qui peuvent être incorporés aux matières plastiques, telles que les charges minérales, pour garantir aussi longtemps que possible un état de surface d'une qualité compatible avec l'information enregistrée.

Un autre élément intervient dans la qualité de surface des disques d'enregistrement, c'est l'adhérence entre l'empreinte de la matrice et la matière plastique. Cette adhérence est notamment fonction de micro-rugosités ou de micro-fissures dans la surface de l'empreinte qui peuvent provoquer l'adhérence de micro-particules de matière plastique qui détériorent l'état de la surface des disques pressés, en augmentant l'adhérence totale de la pièce lors de son démoulage. Dans le cas de disques digitaux, l'information enregistrée étant à l'échelle de ces micro-particules, celles-ci peuvent détruire partiellement l'information par la détérioration de l'état de surface et cette détérioration est également préjudiciable dans le cas du pressage des disques analogiques ou de celui des lentilles de contact par exemple.

Dans la technique de la fabrication de disques analogiques, on a déjà proposé de déposer des couches dures de chrome par voie élec-

- 2 -                                              0079860

trolytique dans le but d'augmenter sa dureté et, par conséquent, la durée de vie de la matrice et la qualité des disques pressés.

Il existe, par ailleurs et depuis de nombreuses années, des procédés pour augmenter la dureté des outils de coupe, des filières ou des moules par dépôt de nitrures de métaux de transition par des procédés de dépôt physique de vapeur, connus en particulier sous l'appelation de CVD. C'est notamment le cas des brevets FR 1 113 670 et US 2 865 791. Ces procédés de revêtement sont exclus dans l'application qui nous intéresse étant donné, d'une part, la température élevée (de l'ordre de 1000°C) nécessaire, à laquelle la matrice ne saurait résister sans se déformer et subir un recuit et, d'autre part, le fait qu'un dépôt réalisé par CVD doit ensuite être poli, ce qui est totalement incompatible avec le moulage de précision et surtout avec la reproduction fidèle d'information, sous forme analogique et plus encore sous forme digitale.

On a également proposé de revêtir des filières ou des moules de formage de métaux par du nitrure de titane déposé non par CVD mais selon la technique connue sous le nom de "ion plating", en vue de diminuer l'usure de ces pièces (Allan Mattew et Dennis G. Teer dans "Ion plated titanium nitride coatings for dies and moulds" Proc. Int. Conf. Ion Plat. Allied Tech. 1979, 2ème 11-20).

Un article de la revue European Plastics News de novembre 1981 relate l'existence d'un procédé de revêtement de moules par du nitrure de titane déposé par CVD, cette technique n'étant pas utilisable dans le cas d'empreintes de matrices de disques pour les raisons déjà expliquées.

Il apparaît à la lumière de cet état de la technique qu'il est bien connu d'augmenter la dureté des surfaces d'outils de coupes de filières ou de moules par des revêtements de nitrures de métaux de transition déposés par CVD ou par pulvérisation cathodique. Ces revêtements sont choisis d'autant plus durs que les contraintes sont élevées, c'est la raison pour laquelle ces revêtements de nitrure de métaux de transition dont la dureté Vickers atteint, voire dépasse 30000 MPa sont généralement utilisés pour le formage du métal.

Comme on l'a mentionné précédemment, dans le cas du moulage de matière plastique, en particulier du moulage de haute précision tel que le pressage des disques phonographiques ou vidéo, le problème

- 3 -

0079860

de l'adhérence présente une importance égale voire supérieure à celui de la dureté et ceci en particulier dans le cas de disques numériques, en raison de la qualité de surface requise et pour faciliter le démoulage étant donné que le pressage est réalisé dans une
installation automatique, en atmosphère contrôlée pour éviter toute présence de poussière.

Le but de la présente invention est d'apporter une amélioration
à la qualité des pièces moulées de haute précision tels que les disques d'enregistrement en réduisant l'adhérence entre la surface de
l'empreinte de moulage et la matière plastique moulée et en augmentant la dureté de l'empreinte et, de ce fait, sa durée de vie.

A cet effet, la présente invention a pour objet une empreinte
de matrice de moulage ou de pressage de précision de matière plastique, notamment de disques d'enregistrement d'information, recouverte d'un revêtement dur. Cette empreinte est caractérisée par le
fait que ce revêtement est formé d'un nitrure d'un métal de transition résultant d'une pulvérisation cathodique dans une atmosphère
d'azote, dont la dureté est supérieure à 13000 MPa et dont l'adhérence moyenne vis-à-vis du PVC moulé par pressage est inférieure de
l'ordre d'un facteur 3 à une couche de chrome déposée par voie électrolytique.

Cette invention a également pour objet un procédé de revêtement
de cette empreinte caractérisé par le fait que l'on effectue la pulvérisation cathodique en combinaison avec la technique de l'"ion plating".

L'utilisation des revêtements de nitrures de métaux de transition déposés par pulvérisation cathodique, nouvelle dans la technique du moulage ou pressage de précision des matières plastiques, notamment pour les empreintes de matrices de pressage de disques d'enregistrement, permet l'utilisation d'une propriété non encore mise
en évidence dans les applications connues, de tels revêtements. On
a, en effet, constaté dans le cas du pressage de PVC entre deux surfaces recouvertes de tels revêtements, une diminution d'importance
surprenante, de l'adhérence entre le PVC pressé et l'empreinte de
la matrice. Cette propriété, demeurée ignorée jusqu'ici n'intervenait pas dans le cas des utilisations antérieures des revêtements
de nitrures de métaux de transition, soit du fait du procédé de type CVD utilisé pour effectuer le dépôt, soit en raison de l'utilisation de ce revêtement, pour le formage du métal qui ne pouvait évidemment pas faire intervenir cette propriété d'adhérence entre le revêtement et la matière plastique. On voit par contre et compte tenu des explications précédentes, le bénéfice que l'on peut retirer de l'utilisation de cette propriété dans le cas du revêtement d'empreintes de matrices de moulage ou de pressage de matière plastique, notamment de disques analogiques ou digitaux phonographiques ou vidéo. Cette réduction de l'adhérence facilite l'automatisation des opérations de pressage des disques digitaux qui doivent se dérouler en enceinte protégée de la poussière. La diminution de l'adhérence entre le moule et la pièce moulée offre donc un double intérêt du point de vue de la fidèlité de l'information, directement liée à l'état de surface et du point de vue des facilités de fabrication offertes par la faible résistance au démoulage. Ce revêtement se prête donc bien à un pressage de matière plastique en atmosphère contrôlée.

Il faut encore signaler, outre la qualité du revêtement, que le procédé utilisé permet de travailler à des températures inférieures à 600°C et, dans le cas du nitrure de zirconium, à une température de l'ordre de 200°C, ce qui est très inférieur aux températures des procédées CVD qui sont de l'ordre de 1000°C. Ce facteur est d'une importance capitale dans l'application qui nous intéresse étant donné qu'il s'agit de restituer intégralement l'information gravée dans la matrice. Or, il est évidemment essentiel pour atteindre ce but, non seulement d'augmenter la dureté de la surface de l'empreinte et de réduire l'adhérence entre cette empreinte et la matière moulée, mais encore d'utiliser un procédé de revêtement qui garantit l'intégrité de cette information. C'est précisément l'ensemble des conditions qui sont réunies par la présente invention. On peut faire remarquer que les avantages de l'invention peuvent également être mis à profit dans tous les cas de moulage de précision de matière plastique, en particulier, dans le moulage de lentilles telles que des lentilles de contact.

Pour réaliser ces revêtements, on a utilisé une installation de pulvérisation cathodique en milieu réactif d'azote dans laquelle la cible est associée à une cathode au magnétron tandis que le substrat est une seconde cathode portée à un potentiel négatif de l'ordre de quelques dizaines de volts. Cette technique est connue sous le nom de "bias sputtering".

Des essais de revêtement ont été réalisés avec différents métaux de transition des groupes IV, V, et VI du système périodique des éléments. On a notamment réalisé des revêtements en nitrure de zirconium ZrN sur des substrats en acier qui peuvent être réalisés à des températures relativement basses.

## Exemple 1

On a réalisé un revêtement de 0,3 $\mu$m d'épaisseur sur un substrat en acier inox 18/8 à partir d'une cible en Zr avec les paramètres suivants: pression totale 0,5 Pa, débits 50 $cm^3$/min Ar, 15 $cm^3$/min $N_2$, puissance du magnétron 0,7 kW, surface d'érosion de la cible 50 $cm^2$, temps de dépôt 2 min, température 200°C à 230°C, tension du substrat contre masse-1,7 kV pendant le décalage du substrat et de l'ordre de -100 V pendant la phase de dépôt.

Ce revêtement présente une dureté Vickers d'environ 20000 MPa, cette dureté pouvant être choisie entre 15000 et 36000 MPa en variant les paramètres de dépôt, notamment en variant le débit de $N_2$.

Un tel revêtement présente plusieurs avantages, en plus de sa dureté. C'est ainsi que la température de dépôt de 200° à 300°C à laquelle on obtient une bonne adhérence du revêtement sur le substrat est parfaitement compatible avec l'état de finition de l'empreinte à revêtir avant le dépôt, puisqu'à cette température, le métal du substrat n'est pas susceptible de se déformer ou de subir un revenu. Cette particularité est évidemment fondamentale puisque le revêtement dur est précisément réalisé pour augmenter la période d'utilisation pendant laquelle l'empreinte conserve sa forme initiale. Il est donc impératif que la forme de cette empreinte ne soit pas modifiée au cours de l'opération qui sert à la protéger en vue des pressages ou moulages successifs à laquelle elle est destinée.

On a également mesuré l'adhérence entre ce revêtement de ZrN et du PVC pressé à chaud entre deux plaques revêtues de ZrN et après refroidissement du PVC au-dessous de 40°C. Ces plaques ont été tirées parallèlement à leurs plans respectifs afin de mesurer la force de cisaillement. Les valeurs mesurées sur les surfaces données se situent entre 1 et 1,85 N. Si l'on compare ces valeurs à celles obtenues avec des dépôts de chrome dur réalisés par voie électrolytique ou par dépôt physique de vapeur qui se situent entre 3,5 et 7,5 N, on constate que l'amélioration est de l'ordre de 3. D'autres tests d'adhérence comparatifs ont permis d'obtenir un rapport moyen de 4 : 1 pour l'adhérence du chrome dur contre celle du ZrN.

Par leur dureté, leur faible adhérence avec le PVC, leur dépôt à température relativement basse, ces revêtements de ZrN déposés par pulvérisation cathodique et "ion plating" offrent des propriétés très intéressantes pour les empreintes des moules ou matrices de précision pour la production d'articles en matière plastique, compte tenu des contraintes importantes auxquelles ces empreintes sont soumises et de la facilité de démoulage accrue conférée par ces revêtements.

Le choix des nitrures de métaux de transition est encore justifié pour le revêtement d'empreintes de moules par le fait qu'ils sont électriquement conducteurs. C'est la raison pour laquelle les oxydes métalliques ont été écartés, le fait qu'ils soient électriquement isolants étant susceptible d'engendrer l'apparition de charges électrostatiques à la surface des pièces moulées, ces charges créant des forces non négligeables tendant à s'ajouter à l'adhérence entre le revêtement et ces pièces moulées de sorte que de tels revêtements neutraliseraient un des avantages importants des revêtments de nitrure.

Exemple 2

Revêtement de TiN sur un substrat en acier rapide à l'aide d'un magnétron équipé d'une cible en Ti et alimenté par un courant de 8 A, la surface d'érosion de la cible étant de 100 $cm^2$ et la puissance du magnétron étant de 3,5 kW. La pression totale dans l'enceinte de pulvérisation est de 1Pa avec 50% $N_2$ et 50% Ar. La température à laquelle le dépôt est effectué est de 500°C et la tension du substrat contre la masse est de -100 V. Le taux de dépôt est de 6 μm/heure et la dureté Vickers du revêtement de 25000 MPa. Quant à l'adhérence avec le PVC, le nombre d'essais réalisés est faible pour établir une moyenne, mais les résultats obtenus montrent également que cette adhérence vis-à-vis du PVC est plus faible que celle d'une couche de Cr dur.

## Exemple 3

On a déposé sur des substrats d'acier 12/12 des revêtements de HfN, VN, $Nb_4N_3$ et TaN avec un courant de magnétron de 2A et une surface d'érosion de la cible de 50 $cm^3$. La pression totale dans l'enceinte de pulvérisation est d'environ 0,5 Pa et la température de dépôt se situe entre 580° et 600°C, le substrat étant à la masse. Comme pour l'exemple 2, en portant la tension du substrat à une valeur fortement négative, il est possible d'obtenir une bonne adhérence du revêtement sur le substrat avec une température de dépôt sensiblement inférieure. La concentration de $N_2$ dans l'enceinte est de 25% dans tous les cas sauf pour le HfN où cette concentration est de 12,5% dans une atmosphère de Ar. Tous ces revêtements présentent des duretés Knoop comprises entre 11000 et plus de 30000 MPa.

## REVENDICATIONS

1. Empreinte de matrice de moulage ou de pressage de précision de matière plastique, notamment de disques d'enregistrement d'information, recouverte d'un revêtement dur, caractérisée par le fait que ce revêtement est formé d'un nitrure d'un métal de transition résultant d'une pulvérisation cathodique dans une atmosphère d'azote, dont la dureté Vickers est supérieure à 13000 MPa et dont l'adhérence moyenne vis-à-vis du PVC moulé par pressage est inférieure de l'ordre d'un facteur 3 à une couche de chrome déposée par voie électrolytique.

2. Empreinte selon la revendication 1, caractérisée par le fait que le revêtement est en un nitrure d'un métal de transition compris entre le IVe et le VIe groupe du système périodique des éléments.

3. Empreinte selon la revendication 1, caractérisée par le fait que le revêtement est en nitrure de zirconium.

4. Procédé de revêtement de l'empreinte selon la revendication 1, caractérisé par le fait que l'on effectue la pulvérisation cathodique en combinaison avec la technique de l'"ion plating".

**Office européen des brevets**

**0079860**

Numéro de la demande

**RAPPORT DE RECHERCHE EUROPEENNE**

EP 82 81 0485

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 279 861 (AIRCO) *Ensemble du document et en particulier page 1, lignes 1-14; page 7, lignes 28-33* | 1-3 | B 29 C 1/04 C 23 C 15/00 |
| D,Y | FR-A-1 113 670 (METALLGESELLSCHAFT) *En entier* | 1-3 | |
| D,Y | EUROPEAN PLASTICS NEWS, novembre 1981, (reçu à l'OEB le 17 novembre 1981), page 8, Londres (GB); "CVD coating service". *Page 8* | 1,2 | |
| D,Y | US-A-2 865 791 (W.RUPPERT) *En entier* | 1-3 | |
| D,Y | CHEMICAL ABSTRACTS, vol. 93, no. 16, 20 octobre 1980, page 278, no. 154660x, Columbus Ohio (USA); A.MATTHEWS et al.: "Ion plated titanium nitride coatings for dies and molds". & PROC.- INT. CONF. ION PLAT. ALLIED TECH. 1979, 2nd, 11-20. *Résumé en entier* | 1,2,4 | DOMAINES TECHNIQUES RECHERCHES (Int. Cl. ³)<br><br>B 29 C 1/00<br>B 23 P 15/00<br>C 23 C |
| A | FR-A-2 412 619 (BALZERS) *En entier* | 2-4 | |
| | --- -/- | | |

Le présent rapport de recherche a été établi pour toutes les revendications

| Lieu de la recherche | Date d'achèvement de la recherche | Examinateur |
|---|---|---|
| LA HAYE | 25-02-1983 | LABEEUW R.C.A. |

Office européen
des brevets

**RAPPORT DE RECHERCHE EUROPEENNE**

**0079860**
Numéro de la demande

EP  82 81 0485

| | **DOCUMENTS CONSIDERES COMME PERTINENTS** | | Page  2 |

| Catégorie | Citation du document avec indication, en cas de besoin, des parties pertinentes | Revendication concernée | CLASSEMENT DE LA DEMANDE (Int. Cl. ³) |
|---|---|---|---|
| A | CHEMICAL ABSTRACTS, vol. 92, no. 20, 19 mai 1980, page 518, no. 171615h, Columbus Ohio (USA); & JP - A - 79 142 137 (PILOT PEN CO., LTD.) (06-11-1979) *Résumé en entier* | 1-4 | |
| | --- | | |
| A | DE-C- 896 562 (DEUTSCHE GOLD- UND SILBER-SCHEIDEANSTALT) | | |
| | ----- | | |

DOMAINES TECHNIQUES RECHERCHES (Int. Cl. ³)

Le présent rapport de recherche a été établi pour toutes les revendications

| Lieu de la recherche LA HAYE | Date d'achèvement de la recherche 25-02-1983 | Examinateur LABEEUW R.C.A. |
|---|---|---|